# EUROPÄISCHE PATENTSCHRIFT

(11) **EP 2 192 384 B1**
(45) Veröffentlichungstag und Bekanntmachung des Hinweises auf die Patenterteilung: **09.01.2013**
(21) Anmeldenummer: 09177050.3
(22) Anmeldetag: 25.11.2009
(51) Int. Cl.: G01C 22/02, G01P 3/36, G01S 17/50, G05D 1/02

(54) **Fahrerloses Transportsystem**
Driverless transport system
Système de transport sans conducteur

(30) Priorität: 27.11.2008 AT 18552008
(43) Veröffentlichungstag der Anmeldung: 02.06.2010
(73) Patentinhaber: DS Automotion GmbH, 4030 Linz (AT)
(72) Erfinder: Holl, Wolfgang, 4040 Linz (AT)
(74) Vertreter: KLIMENT & HENHAPEL

(56) Entgegenhaltungen:
- EP-A2- 1 916 504
- DE-A1-102006 040 612
- DE-A1-102006 062 673
- DE-A1-102007 013 682
- US-A1- 2004 221 790
- Stefan Ericson and Björn Åstrand: "Visual Odometry System for Agricultural Field Robots" 24. Oktober 2008 (2008-10-24), Seiten 1-6, XP002566902 Proceedings of the World Congress on Engineering and Computer Science 2008, October 22 - 24, 2008, San Francisco, USA Gefunden im Internet: URL:http://www.iaeng.org/publication/WCECS 2008/WCECS2008_pp619-624.pdf> [gefunden am 2009-02-04]

## Beschreibung

Die Erfindung betrifft ein fahrerloses Transportsystem umfassend ein Fahrzeug, sowie eine Vorrichtung zur automatisierten Positionsermittlung des Fahrzeugs_ausgehend von einer bekannten Startposition mit zumindest einer am Fahrzeug angeordneten Lichtquelle, einer am Fahrzeug angeordneten Detektiereinheit für das von den Lichtstrahlen der zumindest einen Lichtquelle erzeugte Reflexionsbild des befahrenen Bodens, sowie einer Recheneinheit zur Ermittlung von Positionsänderungen des Fahrzeugs anhand aufeinanderfolgender Reflexionsbilder des befahrenen Bodens, wobei es sich bei der Detektiereinheit um eine Kamera handelt, die Texturelemente des befahrenen Bodens im Erfassungsbereich der Kamera erkennt, und eine Abstandsmesseinrichtung zur Bestimmung des Abstands zwischen der Detektiereinheit und dem von der Detektiereinheit erfassten Bereich des befahrenen Bodens, sowie zur Korrektur der ermittelten Positionsänderung mithilfe eines, für das jeweilige Kamerabild gemessenen Abstands zwischen der Detektiereinheit und dem von der Detektiereinheit erfassten Bereich des befahrenen Bodens vorgesehen ist, gemäß dem Oberbegriff von Anspruch 1.

Vorrichtungen dieser Art werden etwa in fahrerlosen Transportfahrzeugen (FTF), oder in fahrenden Robotersystemen eingesetzt. Der Begriff "Fahrzeug" ist dabei weit auszulegen und umfasst jede Art von selbständig fahrendem Vehikel, wie etwa auch Service- oder Assistenzroboter und dergleichen. Fahrzeuge dieser Art bewegen sich autonom oder zentral gesteuert in Produktionshallen, Lagerbereichen, oder öffentlichen und privaten Bereichen. Zur Navigation derartiger Fahrzeuge muss einer Steuer- und Regelungseinrichtung die aktuelle Position des Fahrzeugs, etwa in Form von Raumkoordinaten eines Bezugspunkts am Fahrzeug, eventuelle Lagewinkel, oder auch die Geschwindigkeit des Fahrzeugs bereit gestellt werden. Das erfolgt in der Regel einerseits mithilfe einer zyklischen Lagepeilung, bei der in vorgegebenen Zeitintervallen die Position des Fahrzeugs anhand von fahrzeugexternen Signalgebern, wie etwa Magnete, Reflektoren, Transponder, Ecken und Kanten von Objekten im Bewegungsraum des Fahrzeugs, oder auch optische Markierungen, die Position des Fahrzeugs im Bewegungsraum ermittelt wird, und andererseits mithilfe einer permanenten Lagekopplung, bei der durch Integration von Bewegungsinkrementen des Fahrzeugs, die im Folgenden auch als Verschiebungsvektoren bezeichnet werden, die Position des Fahrzeugs zwischen externen Signalgebern errechnet wird. Zur Bestimmung des Verschiebungsvektors kommen in herkömmlicher Weise unterschiedliche Kombinationen von Sensoren, wie etwa Inkrementalgeber, Beschleunigungssensoren, Tachometer, Drehwinkelgeber, Drehratengeber, optische Sensoren, oder Laserscanner, zum Einsatz. Diese Sensoren arbeiten zum Teil auf Basis mechanischer Komponenten mit Bodenkontakt, die daher insbesondere erheblichen Verschmutzungen ausgesetzt sind, was deren Wartungsbedarf erhöht und die Genauigkeit der Lagekopplung verringert. Optische Systeme wiederum, die Lageinformationen ohne Bodenkontakt erheben, arbeiten in herkömmlicher Weise auf Basis von Sensorchips, wie sie etwa auch in optischen Computermäusen verwendet werden, die den befahrenen Boden abtasten. Sensorchips dieser Art verfügen aber über den Nachteil, dass sie zwar Verschiebungsvektoren in zweidimensionaler Richtung erfassen können, nicht aber Drehbewegungen des Fahrzeugs, sodass hierfür wiederum separate Sensoren vorgesehen sein müssen. Des Weiteren sind diese Sensoren in vergleichsweise geringem Abstand über den befahrenen Boden zu montieren, was nicht nur deren Verschmutzung fördert, sondern auch die Lagekopplung nur anhand kleinflächiger Texturelemente des befahrenen Bodens ermöglicht. Insbesondere sind etwa zur Detektierung der externen Signalgeber weitere Sensoren vorzusehen.

Bekannte Systeme zur Lagepeilung weisen außerdem mitunter den Nachteil auf, dass die Messgenauigkeit empfindlich gegenüber Umgebungseinflüssen ist, und insbesondere bei Bodenunebenheiten keine genaue Lagepeilung ermöglichen. In vielen Anwendungen liefern daher bekannte Systeme aufgrund der Verschmutzung und der Unebenheit des befahrenen Bodens ungenaue Positionsmessungen. Auch in der Positionierung solcher Systeme am Fahrzeug sind zumeist Einschränkungen gegeben, so müssen sie entweder in einem durch Verschmutzung oder sonstige, äußere Beeinträchtigungen weniger exponierten Bereich des Fahrzeugs angeordnet werden, oder aus messtechnischen Gründen etwa bevorzugt im Bereich einer starren Radachse.

Weitere Vorrichtungen zur automatisierten Positionsermittlung werden in den Druckschriften DE 10 2006 062673, US 2004/221790 und EP 1 916 504, sowie der Veröffentlichung "Visual Odometry System for Agricultural Field Robots" (Proceedings of the World Congress on Engineering and Computer Science 2008, October 22-24, 2008, San Francisco, USA) vorgeschlagen.

Es ist daher das Ziel der Erfindung diese Nachteile zu vermeiden, und ein fahrerloses Transportsystem umfassend ein Fahrzeug, sowie eine Vorrichtung zur automatisierten Positionsermittlung des Fahrzeugs zu verwirklichen, das nicht nur genauere Positionsermittlungen auch bei Bodenunebenheiten ermöglicht, sondern hinsichtlich der Vorrichtung zur automatisierten Positionsermittlung des Fahrzeugs auch einen flexibleren Einbau am Fahrzeug erlaubt, also hinsichtlich ihrer Positionierung am Fahrzeug kaum Einschränkungen unterliegt.

Diese Ziele werden durch die Merkmale von Anspruch 1 erreicht. Anspruch 1 bezieht sich auf ein fahrerloses Transportsystem umfassend ein Fahrzeug, sowie eine Vorrichtung zur automatisierten Positionsermittlung des Fahrzeugs ausgehend von einer bekannten Startposition mit zumindest einer am Fahrzeug angeordneten Lichtquelle, einer am Fahrzeug angeordneten Detektiereinheit für das von den Lichtstrahlen der zumindest einen Lichtquelle erzeugte Reflexionsbild des befahrenen Bodens, sowie einer Recheneinheit zur Ermittlung von Positionsänderungen des Fahrzeugs anhand aufeinanderfolgender Reflexionsbilder des befahrenen Bodens, wobei es sich bei der Detektiereinheit um eine Kamera handelt, die Texturelemente des befahrenen Bodens im Erfassungsbereich der Kamera erkennt, und eine Abstandsmesseinrichtung zur Bestimmung des Abstands zwischen der Detektiereinheit und dem von der Detektiereinheit erfassten Bereich des befahrenen Bodens, sowie zur Korrektur der ermittelten Positionsänderung mithilfe eines, für das jeweilige Kamerabild gemessenen Abstands zwischen der Detektiereinheit und dem von der Detektiereinheit erfassten Bereich des befahrenen Bodens vorgesehen ist. Erfingdungsgemäß ist hierbei vorgesehen, dass die Detektiereinheit zur Auswertung der von der Detektiereinheit ermittelten Bilder des befahrenen Bodens zur Positionsermittlung mit der Recheneinheit verbunden ist, sowie eine zentrale Überwachungseinheit vorgesehen ist, die mit dem Fahrzeug in einer drahtlosen Datenverbindung steht, um Informationen über Fahrziele und Fahrgeschwindigkeit bereit zu stellen, wobei die Recheneinheit über eine Schnittstelle mit einer am Fahrzeug angeordneten Steuer- und Regelungseinrichtung für den Antrieb des Fahrzeugs auf Basis der von der Recheneinheit gelieferten Positionsinformationen, und der von der zentralen Überwachungseinheit bereit gestellten Informationen über Fahrziele und Fahrgeschwindigkeit verbunden ist. Die Kamera, vorzugsweise eine Videokamera, filmt dabei den befahrenen Boden und stellt sie zur weiteren Verarbeitung der Recheneinheit zur Verfügung. Anhand der Verfolgung von automatisiert erkannten Texturelementen des befahrenen Bodens im Erfassungsbereich der Kamera, also etwa die Körnung des Estrichs, Schottersteine, Verschmutzungen des Bodens, usw., in aufeinanderfolgenden Bildern können mithilfe von an sich bekannter Erkennungssoftware Verschiebungsvektoren ermittelt werden. Dabei kann die Positionsermittlung insbesondere auch anhand großflächiger Texturelemente erfolgen, was die Messgenauigkeit erhöht, insbesondere können auch am befahrenen Boden angeordnete, externe Signalgeber zur Lagepeilung erfasst werden. Weitere Sensoren, etwa zur Lagepeilung oder zur Ermittlung von Drehbewegungen, sind daher nicht erforderlich. Die Kamera kann auch in größerem Abstand zum befahrenen Boden montiert werden, wodurch sie Verschmutzungen weniger stark ausgesetzt ist. Allerdings liefert die Verwendung von Bildern einer Kamera mitunter keine ausreichenden Genauigkeiten für eine zuverlässige Positionsermittlung, da äußere Einflüsse, wie etwa Bodenunebenheiten, die Messgenauigkeit noch beeinträchtigen. Ist aber zusätzlich auch eine Abstandmesseinrichtung zur Bestimmung des Abstands zwischen der Detektiereinheit und dem von der Detektiereinheit erfassten Bereich des befahrenen Bodens vorgesehen, kann die Messgenauigkeit entscheidend verbessert werden. Mithilfe einer solchen Abstandmesseinrichtung kann nämlich für jedes Bild der entsprechende Abstand zwischen Kamera und befahrenem Boden ermittelt werden, sodass Verschiebungsvektoren mit hoher Genauigkeit berechnet werden können.

Gemäß einer vorteilhaften Weiterbildung der Erfindung umfasst die Abstandsmesseinrichtung eine Laserlichtquelle, die mit einer optischen Einrichtung für eine strichförmige Projektion des Laserlichts auf den von der Detektiereinheit erfassten Bereich des befahrenen Bodens zur Korrektur der ermittelten Positionsänderung anhand der Positionsänderungen des Laserstrahls in den jeweils von der Kamera erfassten Bildern, versehen ist. Vorrichtungen zur Abstandsmessung mithilfe von Laserlicht sind hinlänglich bekannt, im Zusammenhang mit der vorliegenden Erfindung ist aber vorzugsweise vorgesehen, dass die Laserlichtquelle mit einer optischen Einrichtung für eine strichförmige Projektion des Laserlichts auf den von der Detektiereinheit erfassten Bereich des befahrenen Bodens versehen ist. Je nach Abstand des befahrenen Bodens zur Kamera wird die strichförmige Projektion des Laserstrahls unterschiedliche Positionen im Erfassungsbereich der Kamera aufweisen, die Rückschlüsse auf den Abstand erlauben. Zusätzliche Sensoren zur Abstandsmessung sind daher nicht erforderlich, sondern es wird lediglich das ohnehin von der Kamera erfasste Abbild des befahrenen Bodens herangezogen. Selbstverständlich muss es sich dabei nicht unbedingt um eine strichförmige Projektion des Laserlichts in den Erfassungsbereich der Kamera handeln, sondern es wären auch andere, geometrische Formen der Projektion möglich.

Gemäß der Erfindung ist vorgesehen, dass die Recheneinheit mit einer, vorzugsweise am Fahrzeug angeordneten Steuer- und Regelungseinrichtung für den Antrieb des Fahrzeugs verbunden ist. Dadurch kann ein vollständig autonomes Navigieren des Fahrzeugs erreicht werden, da das Fahrzeug die Positionsermittlung vornimmt, die fahrzeugseitige Recheneinheit aufgrund der aktuellen Position die weitere Fortbewegungsrichtung anhand eines vorgegebenen Fahrziels ermittelt, und entsprechende Steuer- und Regelsignale an den Antrieb des Fahrzeugs setzt.

Wird ein erfindungsgemäßes Fahrzeug mit einer Vorrichtung zur automatisierten Positionsermittlung ausgestattet, und ein solches Fahrzeug im Rahmen eines fahrerlosen Transportsystems eingesetzt, ist erfindungsgemäß außerdem vorgesehen, dass eine zentrale Überwachungseinheit vorgesehen ist, die mit dem Fahrzeug in einer drahtlosen Datenverbindung steht, um Informationen über Fahrziele und Fahrgeschwindigkeit bereit zu stellen, wobei die Recheneinheit über eine Schnittstelle mit einer, vorzugsweise am Fahrzeug angeordneten Steuer- und Regelungseinrichtung für den Antrieb des Fahrzeugs auf Basis der von der Recheneinheit gelieferten Positionsinformationen, und der von der zentralen Überwachungseinheit bereit gestellten Informationen über Fahrziele und Fahrgeschwindigkeit verbunden ist.

Die Erfindung wird im Folgenden anhand eines Ausführungsbeispiels mithilfe der beiliegenden Figuren näher erläutert. Es zeigen hierbei die
Fig. 1 eine schematische Darstellung eines erfindungsgemäßen Fahrzeugs mit einer Vorrichtung zur automatisierten Positionsermittlung von oben gesehen (obere Abbildung), sowie von der Seite gesehen (untere Abbildung), und die
Fig. 2 eine schematische Darstellung einer Vorrichtung zur automatisierten Positionsermittlung eines erfindungsgemäßen Fahrzeugs.

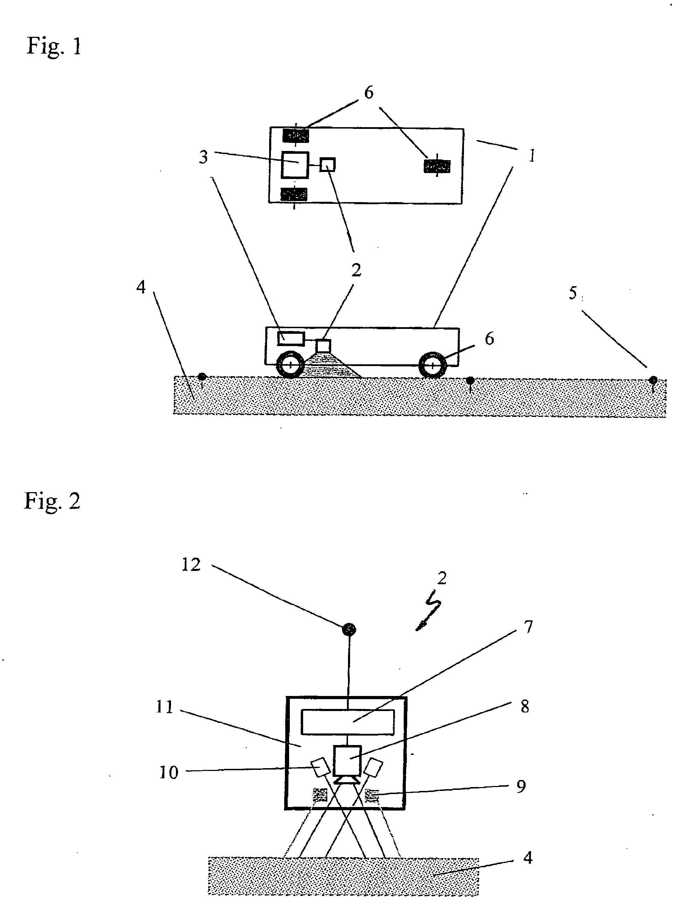

In der Fig. 1 ist eine schematische Darstellung eines erfindungsgemäßen Fahrzeugs 1 mit einer Vorrichtung 2 zur Positionsermittlung des Fahrzeugs 1 von oben gesehen (obere Abbildung), sowie von der Seite gesehen (untere Abbildung) dargestellt. Das Fahrzeug 1 ist Teil eines fahrerlosen Transportsystems, und steht mit einer zentralen Überwachungseinheit (in der Fig. 1 nicht dargestellt) in einer drahtlosen Datenverbindung, um Informationen über Fahrziele und Fahrgeschwindigkeit zu erhalten. Das Fahrzeug 1 bewegt sich mit seinen Rädern 6 auf einem befahrenen Boden 4, der mit externen Signalgebern 5 für eine Lagepeilung versehen ist. Bei den externen Signalgebern 5 kann es sich um Magnete, Reflektoren, Transponder, Ecken und Kanten von Objekten im Bewegungsraum des Fahrzeugs, oder auch optische Markierungen handeln. Im Rahmen der Erfindung werden vorzugsweise solche externen Signalgeber 5 verwendet, die optisch von der Detektiereinheit 8 des Fahrzeugs 1 erfasst werden können, insbesondere steht auch die Möglichkeit zur Verfügung, etwa graphische Symbole zu verwenden, die von der erfindungsgemäßen Vorrichtung erkannt werden können, und entsprechende Steuersignale auslösen. Im gezeigten Ausführungsbeispiel ist das Fahrzeug 1 mit drei Rädern 6 ausgestattet, es könnte sich aber auch um einen Antrieb mit vier Rädern, oder auch um Rollen und dergleichen handeln.

Das Fahrzeug 1 selbst ist in der Fig. 1 lediglich schematisch dargestellt und weist in der Abbildung lediglich die zur Erläuterung der Erfindung wesentlichen Bestandteile auf, es versteht sich aber von selbst, dass das Fahrzeug 1 dem jeweiligen Einsatzgebiet entsprechende Aufbauten, Steuer- und Regelungskomponenten, Sensoren, usw., die nicht im unmittelbaren Zusammenhang mit der Positionsermittlung stehen, aufweisen kann. In der Fig. 1 ist etwa die Vorrichtung 2 zur Positionsermittlung ersichtlich, die mit einer Steuer- und Regelungseinrichtung 3 für den Antrieb des Fahrzeugs 1 verbunden ist.

In der Fig. 2 ist die Vorrichtung 2 zur Positionsermittlung schematisch dargestellt. Sie umfasst in einem Gehäuse 11 insbesondere eine Detektiereinheit 8, die erfindungsgemäß als handelsübliche Kamera, vorzugsweise als Videokamera, ausgeführt ist, und für Licht im sichtbaren Bereich, als auch im Infrarot-Bereich, geeignet ist. Des Weiteren sind Lichtquellen 9 vorgesehen, bei denen es sich etwa um Halogenstrahler, oder um Leuchtdioden handeln kann. Die Lichtquellen 9 beleuchten den befahrenen Boden 4 im Erfassungsbereich der Detektiereinheit 8, und können als Bestandteil der erfindungsgemäßen Vorrichtung, oder auch direkt am Fahrzeug 1 montiert sein. Sie sind des Weiteren im gezeigten Ausführungsbeispiel in Richtung des befahrenen Bodens 4 orientiert, durch Verwendung geeigneter, optischer Einrichtungen könnten aber auch andere Konfigurationen verwirklicht werden. Die Detektiereinheit 8 ist mit einer Recheneinheit 7 verbunden, in der die von der Detektiereinheit 8 ermittelten Bilder des befahrenen Bodens 4 zur Positionsermittlung ausgewertet werden. Die Recheneinheit 7 ist über eine Schnittstelle 12 mit der Steuer- und Regelungseinrichtung 3 (siehe Fig. 1) für den Antrieb des Fahrzeugs 1 verbunden, der sie zyklisch aktualisierte Positionsinformationen übergibt. Die Steuer- und Regelungseinrichtung 3 setzt auf Basis der von der Recheneinheit 7 gelieferten Positionsinformationen, und der von der zentralen Überwachungseinheit bereit gestellten Informationen über Fahrziele und Fahrgeschwindigkeit entsprechende Signale an den Antrieb des Fahrzeugs 1. Die Steuer- und Regelungseinrichtung 3 könnte aber auch vorprogrammierte Informationen über Fahrziele und Fahrzeiten enthalten, sodass das Fahrzeug 1 vollkommen autark arbeitet.

Die Vorrichtung 2 zur Positionsermittlung umfasst des Weiteren eine Abstandmesseinrichtung zur Bestimmung des Abstands zwischen der Detektiereinheit 8 und dem von der Detektiereinheit 8 erfassten Bereich des befahrenen Bodens 4. Vorzugsweise wird sie durch zumindest eine Laserlichtquelle 10 gebildet, die mit einer optischen Einrichtung für eine strichförmige Projektion des Laserlichts auf den von der Detektiereinheit 8 erfassten Bereich des befahrenen Bodens 4 versehen ist. Durch Beobachtung der Laserstriche mithilfe der Detektiereinheit 8 wird der Abstand zum befahrenen Boden 4 errechnet.

Anhand aufeinanderfolgender Reflexionsbilder eines, von der Detektiereinheit 8 erfassten, und von den Lichtquellen 9 beleuchteten Bereiches des befahrenen Bodens 4 werden Kamerabilder des befahrenen Bodens 4 erstellt, wobei durch Positionsvergleich von Bildelementen aufeinanderfolgender Kamerabilder die Positionsänderung des Fahrzeugs 1 ermittelt, und mithilfe eines, für das jeweilige Kamerabild gemessenen Abstands zwischen der Detektiereinheit 8 und dem von der Detektiereinheit 8 erfassten Bereich des befahrenen Bodens 4 korrigiert wird. Die so ermittelte Positionsänderung ergibt, ausgehend von einer bekannten Startposition, die aktuelle Position des Fahrzeugs 1. Dabei werden die Signale der externen Signalgeber 5 miteinbezogen, die als absolute Bezugspunkte für die Positionsermittlung dienen, und bei deren Passieren eine Überprüfung der ermittelten Position, sowie deren allfällige Korrektur, erlauben.

Die Positionsermittlung des Fahrzeugs 1 mithilfe der von der Detektiereinheit 8 erfassten Bilder erfolgt anhand der Verfolgung von automatisiert erkannten Texturelementen des befahrenen Bodens 4 im Erfassungsbereich der Kamera, also etwa die Körnung des Estrichs, Schottersteine, Verschmutzungen des Bodens, usw., in aufeinanderfolgenden Bildern. Grundsätzlich ist dabei die Genauigkeit der Positionsermittlung von der Brennweite der als Detektiereinheit 8 verwendeten Kamera, ihrer Auflösung, sowie dem Abstand der Detektiereinheit 8 vom Boden 4 abhängig. Die Messgenauigkeit ist dabei direkt proportional zur Auflösung und zur Brennweite der als Detektiereinheit 8 verwendeten Kamera, sowie indirekt proportional zum Abstand der Detektiereinheit 8 vom Boden 4. Des Weiteren kann die Genauigkeit der Positionsermittlung dadurch erhöht werden, indem pro Zeiteinheit eine größere Anzahl aufeinander folgender Bilder analysiert wird. Diese Größe wird auch als "frames per second" (fps) bezeichnet. Diese Größe ist aber in der Praxis durch den damit verbundenen Rechenaufwand begrenzt. Die Genauigkeit der Positionsermittlung könnte somit auch durch eine Vergrößerung des Erfassungsbereiches der Kamera erhöht werden, da dadurch während eines Bewegungsweges von z.B. einem Meter eine geringere Anzahl an Bilder pro Sekunde ausgewertet werden müsste. Da die Messgenauigkeit mit zunehmendem Abstand der Kamera zum bewegten Boden 4 aber abnimmt, könnte daher die Detektiereinheit 8 nicht, wie in der Fig. 2 dargestellt ist, mit einer zum Boden 4 senkrechten, optischen Achse ausgerichtet werden, sondern mit einer zum Boden 4 schräg orientierten, optischen Achse. Dadurch wird der Erfassungsbereich vergrößert, sodass pro Zeiteinheit weniger Bilder analysiert werden müssen. Die Anzahl der ausgewerteten Bilder pro Sekunde (fps) muss jedenfalls ausreichend groß sein, um eine starke Überlappung zweier aufeinander folgender Bilder sicher zu stellen, da ansonsten die Lageänderung von Texturelementen nicht mit ausreichender Genauigkeit nach verfolgt werden kann. Ein wesentlicher Parameter bei der Auslegung von Brennweite, Auflösung und Montagehöhe der als Detektiereinheit 8 verwendeten Kamera, sowie der Anzahl der analysierten Bilder pro Zeiteinheit ist somit durch die erforderlichen Antriebsgeschwindigkeiten des Fahrzeugs 1, sowie der Größe der Bewegungswege gegeben.

Die durch die Kamera ermittelten Bilder des befahrenen Bodens 4 werden in weiterer Folge digitalisiert, und vorzugsweise bekannten Verfahren zur Bildverarbeitung, wie Konvertierung in Schwarz-Weiß-Bilder, Datenkomprimierung, Korrektur von Linsenfehlern, sowie Korrektur von Schattenanomalien, unterzogen, wofür ebenfalls hinlänglich bekannte Software zur Verfügung steht. Die so aufbereiteten Bilder werden schließlich bekannten Verfahren zur Positionsermittlung unterzogen, die etwa auf den bekannten Verfahren des "stereo matching", oder dem Kanade-Lucas-Tomasi (KLT)-Verfahren beruhen. Auch hierfür ist entsprechende Erkennungssoftware verfügbar, die aus der Lageänderung von Texturelementen in zeitlich aufeinander folgenden Bildsequenzen Verschiebungsvektoren ermittelt. Dabei kann die Positionsermittlung insbesondere auch anhand großflächiger Texturelemente erfolgen, was die Messgenauigkeit erhöht.

Als Laserlichtquellen 10 zur Abstandsmessung können handelsübliche Laser verwendet werden, wobei zwecks leichterer Erkennung durch die Erkennungssoftware vorzugsweise eine strichförmige Projektion des Laserstrahls auf den von der Detektiereinheit 8 erfassten Bereich des befahrenen Bodens 4 erfolgt. Durch Abstandänderungen, etwa in Folge von Erschütterungen oder Bodenunebenheiten, kommt es zu geringfügigen Positionsänderungen des Laserstrahls in den jeweils von der Kamera erfassten Bildern, aus denen die Abstandsänderungen errechnet werden können. Somit kann jeder Verschiebungsvektor, der anhand verschiedener Bilder ermittelt wird, anhand des für jedes Bild bekannten Abstands von der Detektiereinheit 8 korrigiert werden. Dadurch ist eine entscheidende Verbesserung der Positionsermittlung möglich.

Mithilfe der erfindungsgemäßen Vorrichtung ist es somit möglich, die automatisierte Positionsermittlung eines Fahrzeugs 1 auch bei störenden, äußeren Einflüssen, wie etwa Bodenunebenheiten, mit erhöhter Genauigkeit durchzuführen. Dabei ist auch ein flexibler Einbau am Fahrzeug 1 erlaubt, da aufgrund der Verwendung einer Kamera als Detektiereinheit 8 hinsichtlich ihrer Positionierung am Fahrzeug 1 kaum Einschränkungen bestehen.

## Patentansprüche

1. Fahrerloses Transportsystem umfassend ein Fahrzeug (1), sowie eine Vorrichtung zur automatisierten Positionsermittlung des Fahrzeugs (1) ausgehend von einer bekannten Startposition, mit zumindest einer am Fahrzeug (1) angeordneten Lichtquelle (9), einer am Fahrzeug (1) angeordneten Detektiereinheit (8) für das von den Lichtstrahlen der zumindest einen Lichtquelle (9) erzeugte Reflexionsbild des befahrenen Bodens (4), sowie einer Recheneinheit (7) zur Ermittlung von Positionsänderungen des Fahrzeugs (1) anhand aufeinanderfolgender Reflexionsbilder des befahrenen Bodens (4), wobei es sich bei der Detektiereinheit (8) um eine Kamera handelt, die Texturelementen des befahrenen Bodens (4) im Erfassungsbereich der Kamera erkennt, und eine Abstandsmesseinrichtung zur Bestimmung des Abstands zwischen der Detektiereinheit (8) und dem von der Detektiereinheit (8) erfassten Bereich des befahrenen Bodens (4), sowie zur Korrektur der ermittelten Positionsänderung mithilfe eines, für das jeweilige Kamerabild gemessenen Abstands zwischen der Detektiereinheit (8) und dem von der Detektiereinheit (8) erfassten Bereich des befahrenen Bodens (4) vorgesehen ist, wobei die Detektiereinheit (8) zur Auswertung der von der Detektiereinheit (8) ermittelten Bilder des befahrenen Bodens (4) zur Positionsermittlung mit der Recheneinheit (7) verbunden ist, **dadurch gekennzeichnet, dass** im Transportsystem eine zentrale Überwachungseinheit vorgesehen ist, die mit dem Fahrzeug (1) in einer drahtlosen Datenverbindun steht, um Informationen über Fahrziele und Fahrgeschwindigkeit bereit zu stellen, wobei die Recheneinheit (7) über eine Schnittstelle (12) mit einer, am Fahrzeug (1) angeordneten Steuer- und Regelungseinrichtung (3) für den Antrieb des Fahrzeugs (1) auf Basis der von der Recheneinheit (7) gelieferten Positionsinformationen, und der von der zentralen Überwachungseinheit bereit gestellten Informationen über Fahrziele und Fahrgeschwindigkeit verbunden ist.

2. Fahrerloses Transpertsystem nach Anspruch 1, **dadurch gekennzeichnet, dass** die Abstandsmesseinrichtung eine Laserlichtquelle (10) umfasst, die mit einer optischen Einrichtung für eine strichförmige Projektion des Laserlichts auf den von der Detektiereinheit (8) erfassten Bereich des befahrenen Bodens (4) zur Korrektur der ermittelten Positionsänderung anhand der Positionsänderungen des Laserstrahls in den jeweils von der Kamera erfassten Bildern, versehen ist.

3. Fahrerloses Transportsystem nach Anspruch 1, **dadurch gekennzeichnet, dass** fahrzeugexterne Signalgeber (5) als absolute Bezugspunkte für die Positionsermittlung zur Detektierung mithilfe der fahrzeugseitigen Detektiereinheit (8) vorgesehen sind, wobei die fahrzeugexternen Signalgeber (5) am befahrenen Boden (4) angeordnet sind.

## Claims

1. A driverless transport system, comprising a vehicle (1) and an apparatus for automatic position detection of the vehicle (1) based on a known starting position, comprising at least one light source (9) arranged on the vehicle (1), a detection unit (8) arranged on the vehicle (1) for the reflection image of the travelled ground (4) as generated by the light beams of the at least one light source (9), and a computing unit (7) for determining changes in position of the vehicle (1) on the basis of successive reflection images of the travelled ground (4), with the detection unit (8) concerning a camera which recognizes texture elements of the travelled ground (4) in the detection range of the camera, and a distance measuring device for determining the distance between the detection unit (8) and the area of the travelled ground (8) as detected by the detection unit (8), and for correcting the determined change in position by means of a distance measured for the respective camera image between the detection unit (8) and the area of the travelled ground (4) as detected by the detection unit (8), with the detection unit (8) being connected with the computing unit (7) for evaluating the images of the travelled ground (8) as determined by the detection unit (8) for determining the position, **characterized in that** a central monitoring unit is provided in the transport system, which monitoring unit is in a wireless data connection with the vehicle (1) in order to provide information on travel destinations and travel speed, with the computing unit (7) being connected via an interface (12) with an open-loop and closed-loop control device (3) arranged on the vehicle (1) for the drive of the vehicle (1) on the basis of the position information supplied by the computing unit (7) and the information on destinations and travel speed as provided by the central monitoring unit.

2. A driverless transport system according to claim 1, **characterized in that** the distance measuring device comprises a laser light source (10) which is provided with an optical device for the linear projection of the laser light onto the area of the travelled ground which is detected by the detection unit (8) for correcting the determined change in position on the basis of the changes in position of the laser beam in the images respectively detected by the camera.

3. A driverless transport system according to claim 1, **characterized in that** signal transmitters (5) outside of the vehicle are provided as absolute reference points for position determination for detection by means of the vehicle-side detection unit (8), with the signal transmitters (5) outside of the vehicle being arranged on the travelled ground (4).

## Revendications

1. Système de transport sans conducteur comprenant un véhicule (1) ainsi qu'un dispositif pour la détermination automatique de la position du véhicule (1) à partir d'une position de départ connue, avec au moins une source lumineuse (9) disposée sur le véhicule (1), une unité de détection (8) disposée sur le véhicule (1) pour l'image réfléchie du sol parcouru (4) produite par les rayons lumineux de l'au moins une source lumineuse (9), ainsi qu'une unité de calcul (7) pour déterminer les changements de position du véhicule (1) à l'aide d'images réfléchies successives du sol parcouru (4), l'unité de détection (8) étant une caméra qui reconnaît des éléments de texture du sol parcouru (4) dans sa zone d'acquisition, et un dispositif de mesure de la distance étant prévu pour déterminer la distance entre l'unité de détection (8) et la zone du sol parcouru (4) acquise par l'unité de détection (8) et pour corriger le changement de position déterminé à l'aide d'une distance mesurée pour chaque image de la caméra entre l'unité de détection (8) et la zone du sol parcouru (4) acquise par l'unité de détection (8), dans lequel l'unité de détection (8) est reliée à l'unité de calcul (7) pour analyser les images du sol parcouru (4) acquises par l'unité de détection (8) en vue de déterminer la position, **caractérisé en ce qu'**il est prévu dans le système de transport une unité de surveillance centrale qui est en communication de données sans fil avec le véhicule (1) pour fournir des informations sur les destinations et la vitesse de marche, l'unité de calcul (7) étant reliée par une interface (12) à une unité de commande et de régulation (3) disposée sur le véhicule (1) en vue de la propulsion du véhicule (1) sur la base des informations de position fournies par l'unité de calcul (7) et des informations sur les destinations et la vitesse de marche fournies par l'unité centrale de surveillance.

2. Système de transport sans conducteur selon la revendication 1, **caractérisé en ce que** le dispositif de mesure de la distance comprend une source de lumière laser (10) qui est munie d'un dispositif optique pour une projection en forme de trait de la lumière du laser sur la zone du sol parcouru (4) acquise par l'unité de détection (8) en vue de la correction du changement de position déterminé à l'aide des changements de position du faisceau laser dans les images acquises par la caméra.

3. Système de transport sans conducteur selon la revendication 1, **caractérisé en ce que** sont prévus des générateurs de signaux (5) extérieurs au véhicule servant de points de référence absolus pour la détermination de la position et destinés à être détectés à l'aide de l'unité de détection (8) embarquée sur le véhicule, les générateurs de signaux (5) extérieurs au véhicule étant disposés sur le sol parcouru (4).
